(19) Europäisches Patentamt / European Patent Office / Office européen des brevets

(11) **EP 2 348 384 A2**

(12) **EUROPEAN PATENT APPLICATION**

(43) Date of publication:
**27.07.2011  Bulletin 2011/30**

(51) Int Cl.:
***G06F 3/01*** *(2006.01)*

(21) Application number: **10194994.9**

(22) Date of filing: **14.12.2010**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **05.01.2010  KR 20100000483**

(71) Applicant: **Samsung Electronics Ltd.
Suwon-si, Gyeonggi-do 442-742 (KR)**

(72) Inventors:
 • **Bae, Yu-Dong
 442-742, Gyeonggi-do (KR)**

 • **Lee, Eun-Hwa
 442-742, Gyeonggi-do (KR)**
 • **Lee, Jeong-Seok
 442-742, Gyeonggi-do (KR)**
 • **Yun, In-Kuk
 442-742, Gyeonggi-do (KR)**

(74) Representative: **Jenkins, Richard Gavin
 Harrison Goddard Foote
 106 Micklegate
 York YO1 6JX (GB)**

(54) **Haptic feedback control method and apparatus for a wireless terminal having a touch screen**

(57)    A haptic feedback control method and apparatus for a wireless terminal including a touch screen. The haptic feedback control method includes receiving a touch input from a user, sensing a voltage or current signal at a position where the touch input is received, transmitting a driving signal to an actuator based on the sensed signal, generating, by the actuator, a vibration output based on the driving signal at the position on the touch screen where the touch input is received, generating a control pulse having a predetermined time delay while generating the vibration output, and stopping the vibration output by applying the control pulse to the vibration output.

FIG.4

EP 2 348 384 A2

**Description**

**BACKGROUND OF THE INVENTION**

1. Field of the Invention

The present invention generally relates to a wireless terminal including a touch screen, and more particularly, to a haptic feedback control method and apparatus for the touch screen.

2. Description of the Related Art

Touch screens are often built into wireless terminals in order to provide relatively larger screens and allow simple, slim designs. However, unlike a general keypad with a plurality of mechanical key buttons, a typical touch screen does not provide user with physical feedback when pressing buttons, i.e., a sense of clicking, which causes frequent errors in key input operations.
To overcome this type of problem, a haptic feedback method using a vibration motor has been provided, wherein a wireless terminal allows a user to recognize a key input by generating vibration feedback when a user contacts a touch screen. However, even this method still fails to provide the same feel to a user that is provided from a conventional mechanical key pad structure. For example, in a conventional mechanical key pad structure, a key contact and a key input are distinguished from each other. That is, a user can feel a particular key before pressing that key. However, when using a touch screen, a user touch on a surface of the touch screen acts as a key input, resulting in frequent erroneous inputs. That is, a user cannot feel the touch screen to identify a particular key for pressing.
To solve this problem, in a key input on the touch screen, a vibration feedback corresponding to the key input is provided by using a coin motor, a bar motor, a linear motor, and a piezo actuator, thereby allowing the use to recognize the key input. A vibration motor, which is generally used to provide the vibration feedback, has long residual vibration even after its vibration is stopped, resulting in a high probability of an error in a fast key input. To reduce the residual vibration after stopping vibration, a method of abruptly stopping a coin motor or a bar motor by using over-driving has been proposed.
U.S. Patent Publication No. 2006-0119573 invented by Grant et al., titled "Systems and Methods for Controlling a Resonant Device for Generating Vibrotactile Haptic Effect" proposes an active braking method based on 180° phase shift for a linear motor using resonance.
However, the conventional method for abruptly stopping output of the vibration has some problems.
FIG 1 is a graph illustrating a vibration pattern when a resonant motor is stopped according to prior art.
As illustrated in FIG 1, the braking method based on a 180° phase signal, using the linear motor, responds very sensitively to a corresponding frequency. Even for a variation of 2 Hz or more from an optimal point, the brake does not work well very often.
FIG 2 illustrates a simulation result of a vibration pattern with respect to a difference between a frequency used to abruptly stop output of vibration and a resonance frequency according to prior art.
Such an operation can be expressed by Equation (1) in which $\omega d$ is a period that is similar to a natural frequency. Therefore, by inputting a 180° out-of-phase signal, vibration is removed through an offset.

$$m\ddot{x}(t) + c\dot{x}(t) + kx(t) = 0.$$

$$x(t) = e^{-\zeta\omega_n t}\left(x_0\cos(\omega_d t) + \frac{v_0 + \zeta\omega_n x_0}{\omega_d}\sin(\omega_d t)\right)$$

$$x(t) = A\,e^{-\zeta\omega_n t} * \sin(\omega_d t + \phi)$$

$$\omega d = ( \omega n^2 - (c/2m)^2 )^{1/2}$$

$$\omega n = (k/m)^{1/2} \quad : \text{natural frequency}$$

$$c : \text{damping coefficient}$$

$$\zeta = c/(2m\,\omega_n) \quad : \text{damping ratio} \qquad \ldots (1)$$

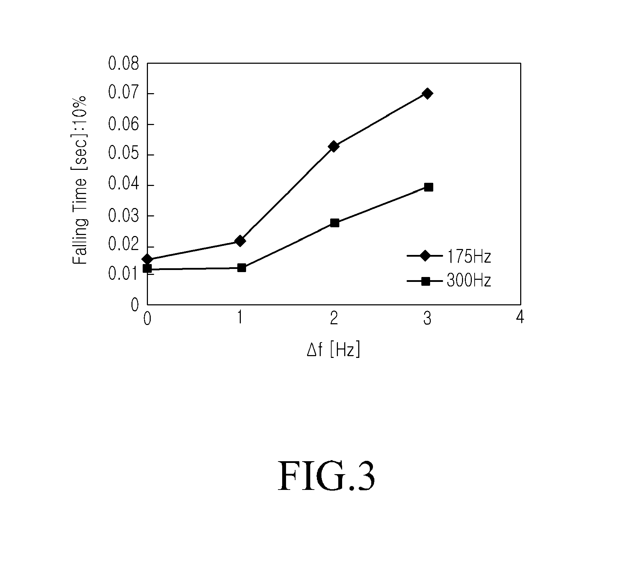

FIG. 3 is a graph illustrating measurements of a falling time when stopping vibration driving with respect to a difference between a driving frequency and a resonance frequency according to prior art.

Referring to FIG. 3, for a short vibration-stopping time of 20 ms or less, the frequency is controlled to 1 Hz or less.

## SUMMARY OF THE INVENTION

Accordingly, the present invention has been made to solve at least the above-described problems occurring in the prior art, and to provide at least the following advantages.

An aspect of the present invention is to provide a method for abruptly braking a vibration output, without changing a driving frequency, thereby avoiding residual vibration after stopping the vibration output.

In accordance with an aspect of the present invention, a haptic feedback control method is provided for a wireless terminal including a touch screen. The haptic feedback control method includes receiving a touch input from a user, sensing a voltage or current signal generated in a position where the touch input is received, transmitting a driving signal to an actuator based on the sensed signal, generating a vibration output at the position on the touch screen where the touch input is generated based on the driving signal, generating a control pulse having a predetermined time delay while generating the vibration output, and stopping the vibration output by applying the control pulse to the vibration output maintaining a particular pattern.

In accordance with another aspect of the present invention, a haptic feedback control apparatus is provided for a wireless terminal including a touch screen. The haptic feedback control apparatus includes an actuator for generating a vibration output at a particular vibration frequency, a frequency generator for generating a driving signal having a frequency within a frequency range, and a controller for receiving the driving signal to drive the actuator, generating a control pulse having a predetermined time delay, and stopping the vibration output of the actuator by applying the control pulse to the vibration output maintaining a particular pattern.

## BRIEF DESCRIPTION OF THE DRAWINGS

The above and other aspects, features, and advantages of certain embodiments of the present invention will be more apparent from the following detailed description taken in conjunction with the accompanying drawings, in which:

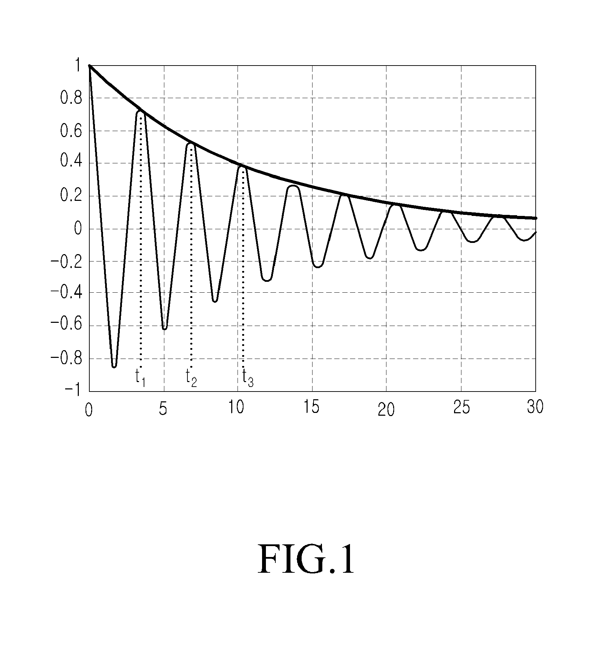

FIG. 1 is a graph illustrating a vibration pattern when a resonant motor is braked according to prior art;

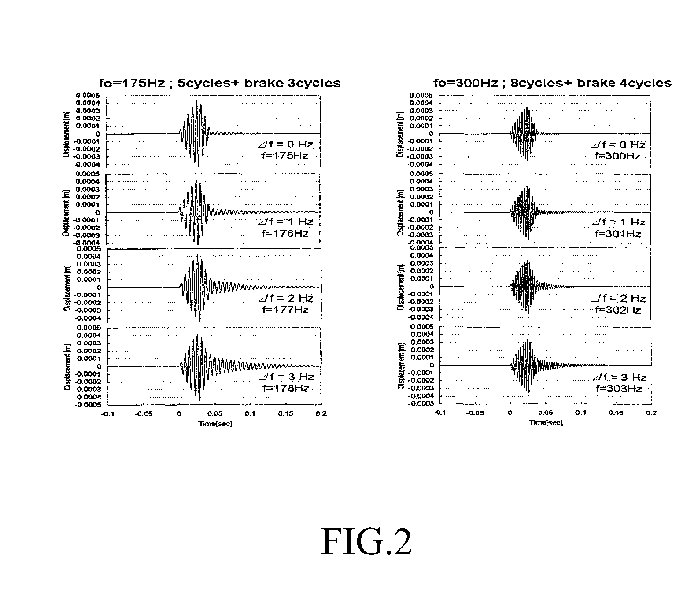

FIG. 2 illustrates a simulation result of a vibration pattern with respect to a difference between a frequency used to abruptly stop a vibration output and a resonance frequency according to prior art;

FIG. 3 is a graph illustrating measurements of a falling time when stopping vibration driving with respect to a difference between a driving frequency and a resonance frequency according to prior art;

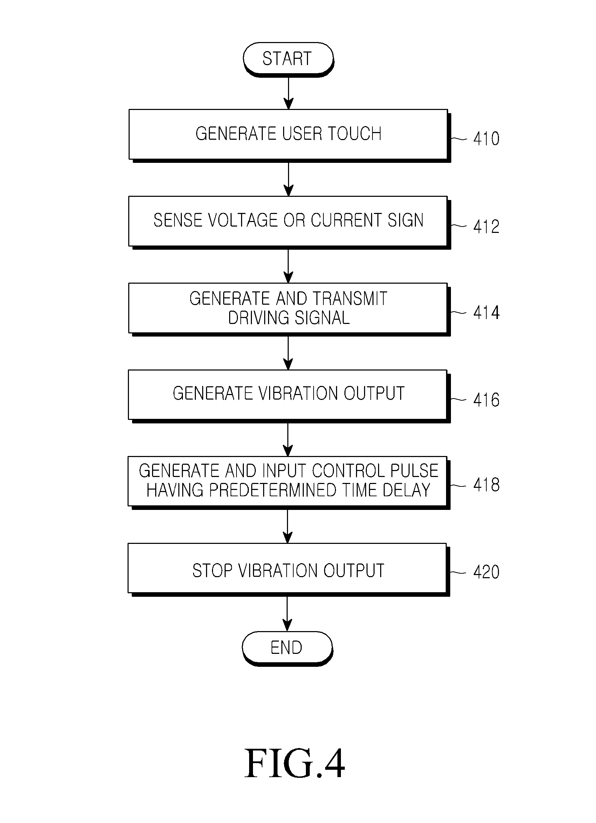

FIG. 4 is a flowchart illustrating a haptic feedback control method for a wireless terminal including a touch screen according to an embodiment of the present invention;

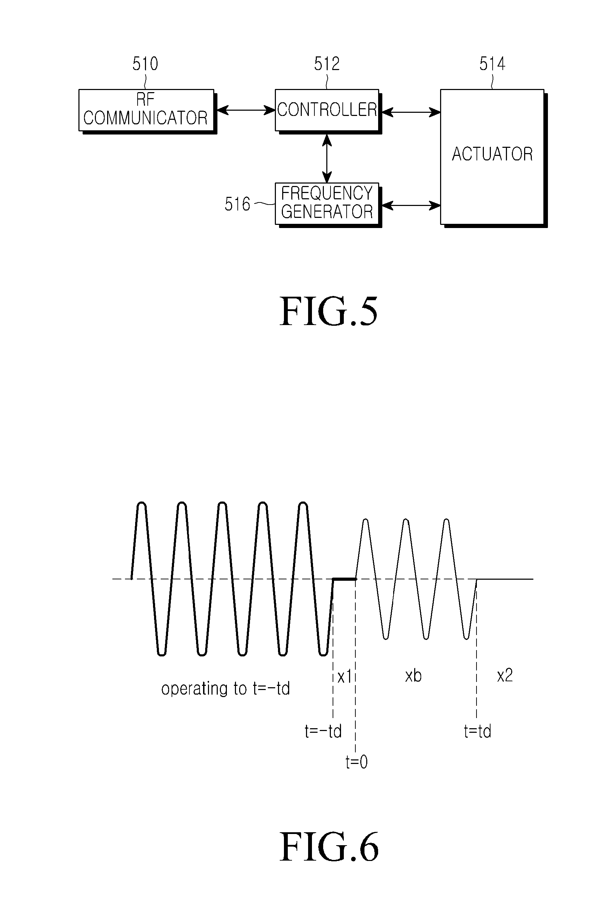

FIG. 5 is a block diagram of a haptic feedback control apparatus for a wireless terminal including a touch screen according to an embodiment of the present invention;

FIG. 6 is a graphical representation of a control pulse according to an embodiment of the present invention; and

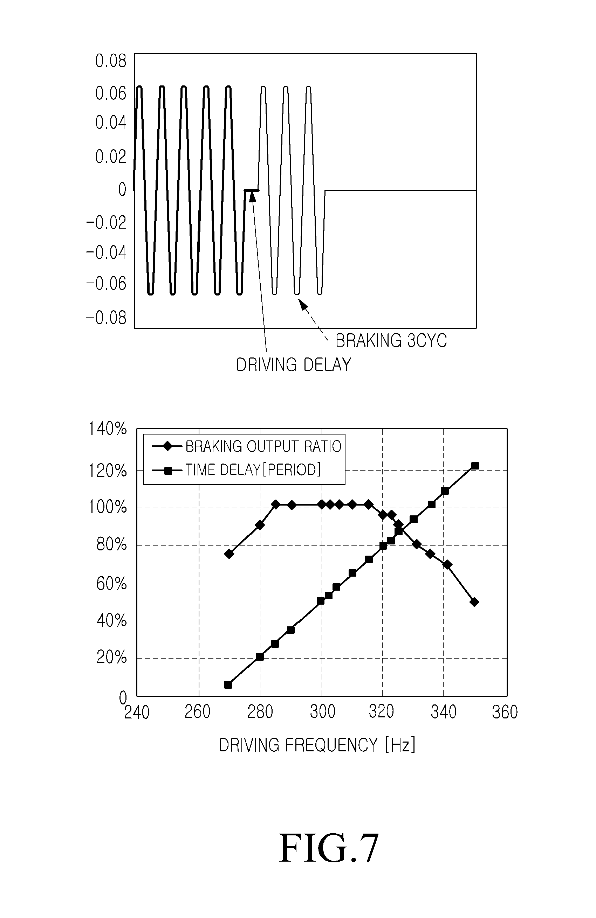

FIG. 7 illustrates simulation results of an optimal time delay of a control pulse and a strength of a braking signal with respect to a driving frequency in a wireless terminal including a touch screen according to an embodiment of the present invention.

## DETAILED DESCRIPTION OF EMBODIMENTS OF THE INVENTION

Hereinafter, various embodiments of the present invention will be described in detail with reference to the accompanying drawings. Various details found in the following description are provided only to help general understanding of the present invention, and it is apparent to those of ordinary skill in the art that some modifications or changes may be made to the details within the scope of the present invention.

In accordance with an embodiment of the present invention, when generating a vibration output as feedback for a user key input in a wireless terminal, a control pulse having a predetermined time delay is applied to a vibration output maintaining a particular pattern, removing vibration when braking the vibration output, without residual vibration.

FIG. 4 is a flowchart illustrating a haptic feedback control method for a wireless terminal including a touch screen according to an embodiment of the present invention.

Referring to FIG. 4, in step 410, a touch input is received from a user through the touch screen. The touch input is a touch on a surface of the touch screen by a user's finger, a stylus pen, etc., and at least one touch input is generated from the user, such that a plurality of touch inputs may be rapidly generated in succession like key inputs of a conventional keypad.

In step 412, a voltage or current signal is sensed at a position where the touch input is received from the user.

A driving signal having a frequency within a frequency range is generated based on the signal sensed in step 412 and is transmitted to an actuator in step 414.

In step 416, the actuator is driven by the driving signal transmitted in step 414 and a vibration output generated by the driving of the actuator is applied at the position on the touch screen where the touch input was received from the user.

In step 418, to promptly stop the vibration output generated by the actuator, a control pulse having a predetermined time delay is generated and the generated control pulse is input to the vibration output maintaining a predetermined pattern. The operation of stopping the vibration output is intended to provide a feedback with respect to each touch input to the user because a plurality of touch inputs are rapidly generated in succession from the user.

For example, the control pulse is a pulse having 5 cycles or less, and the frequency of the pulse is the same as a frequency at the driving of the actuator based on the vibration output. Accordingly, the stopping of the vibration output is performed when the driving frequency of the actuator is controlled to be the same as the frequency of the pulse.

In step 420, the vibration output generated by the driving of the actuator is abruptly stopped using the generated control pulse.

FIG. 5 is a block diagram illustrating a haptic feedback control apparatus for a wireless terminal including a touch screen according to an embodiment of the present invention.

Referring to FIG. 5, a wireless terminal includes a Radio Frequency (RF) communicator 510, the touch screen (not shown), at least actuator 514, a frequency generator 516, and a controller 512. The wireless terminal 100 may further include a camera, a speaker, a microphone, etc.

The RF communicator 510 receives a radio downlink signal via an antenna, and outputs downlink data acquired by demodulating the radio downlink signal to the controller 512. Additionally, the RF communicator 510 generates a radio uplink signal by modulating uplink data input from the controller 512 and wirelessly transmits the generated radio uplink signal to the air via the antenna. For example, the modulation and the demodulation may be performed according to Code Division Multiple Access (CDMA), Frequency Division Multiplexing (FDM), or Time Division Multiplexing (TDM).

The touch screen 511 displays an image under the control of the controller 512, generates a key touch interrupt, upon receiving a touch on the surface of the touch screen 511 and outputs user input information including input coordinates and an input state to the controller 512 under the control of the controller 512.

The key touch interrupt is the same as a key input interrupt generated in a conventional touch screen, such that upon generation of a touch input from the user, the touch screen 511 generates a voltage or current signal at a position where the touch input is generated and outputs the voltage or current signal to the controller 512, or generates a key input interrupt indicating a key input other than the key touch interrupt.

The at least one actuator 514 generates a vibration at a particular vibration frequency. The actuator 514 is installed under the touch screen. Commonly, the touch screen includes transparent glass, a touch panel, and a Liquid Crystal Display (LCD). The actuator 514 applies a vibration having a pattern based on a driving signal being input from the controller 512 to the touch screen.

The actuator 514 generates a vibration using a coin motor, a bar motor, a linear motor, a piezo actuator, etc., as a feedback, thereby allowing the user to recognize a key input.

The frequency generator 516 generates a driving signal having a frequency within a frequency range, and outputs the driving signal to the controller 512.

The controller 512 senses the generated voltage or current signal, and controls the frequency generator 516 to generate the drive signal based on the sensed signal.

The controller 512 receives the drive signal generated by the frequency generator 516 to drive the actuator 514 and apply a vibration generated by the driving of the actuator 514 at the position on the touch screen where the touch input is received from the user.

The controller 512 distinguishes a user key touch and a key click generated on the touch screen, and upon generation of the key touch, i.e., the key input, the controller 512 outputs a feedback (e.g., sound or vibration) with respect to the key input only for a preset time.

More specifically, the controller 512 senses the voltage or current signal generated due to the user's touch input in a particular region on the touch screen, generates the driving signal having a frequency within a frequency range, e.g., a single resonance frequency (natural frequency) being set at the time of manufacturing of the wireless terminal, and drives the actuator 514 to apply a vibration output at the position on the touch screen where the user's touch input is received. Although FIG. 5 is described using the input of a single touch input, multiple touch inputs may be received from the user in succession. For the multiple touch inputs, the controller 512 drives the actuator 514 and applies the generated vibration output to the touch screen as a feedback for each touch input.

Thereafter, to promptly stop the vibration output generated by the actuator 514, the controller 512 generates a control pulse having a predetermined time delay.

For example, the control pulse is a pulse having 5 cycles or less, and the frequency of the pulse is the same as a frequency at the driving of the actuator 514 .

FIG. 6 is a graphical representation of a control pulse according to an embodiment of the present invention, wherein a control pulse having a predetermined time delay is applied to a vibration output maintaining a particular pattern to delay the vibration output by a time td and a braking signal is driven for a time tp.

Referring to FIG. 6, the control pulse (-td~ tp) having the predetermined time delay is generated to stop the vibration output of the actuator 514 by being applied to the vibration output generated in a vibration pattern having periodic pulse waveforms prior to t=-td.

The controller 512 controls the time td and the time tp of the control pulse and the braking signal intensity B by using Equation (2).

$$at\ x_1(-t_d < t < 0)$$

$$x_1(t) = A_1 \exp\{-\xi\omega_n(t+t_d)\}\sin\{\omega_d(t+t_d) + \phi_1\}$$

$$at\ x_b(0 < t < t_p)$$

$$x_b(t) = A_b \exp\{-\xi\omega_n t\}\sin\{\omega_d t + \phi_2\} + B\sin(\omega t)$$

$$at\ x_2(t > t_p)$$

$$x_2(t) = \exp\{-\xi\omega_n(t-t_p)\}[x_{p0}\cos\{\omega_d(t-t_p)\} + (v_{p0} + \xi\omega_n x_{p0})/\omega_d * \sin\{\omega_d(t-t_p)\}]$$

$$If\ at\ t = t_p,\ x_{p0} = 0,\ v_{p0} = 0 \Rightarrow x_2 = 0\ (t > t_p)$$

$$Because\ \sin(\omega t_p) = 0,$$

$$x_{p0} = A_b \exp\{-\xi\omega_n t_p\}\sin\{\omega_d t_p + \phi_2\} = 0$$

$$\omega_d t_p + \phi_2 = (2N-1)\pi$$

$$v_{p0} = -\omega_d A_b \exp\{-\xi\omega_n t_p\} + B\omega = 0$$

$$B\omega = \omega_d A_b \exp\{-\xi\omega_n t_p\}$$

$$A_b, \phi_2\ are\ a\ function\ of\ t_d$$

$$\ldots (2)$$

at x1 (-td<t<0)

$$x_1(t) = A_1 \exp^{-\zeta \omega_n (t+t_d)} * \sin\{\omega_d(t+t_d) + \phi_1\}$$

at xb(0<t<tp)

$$x_b(t) = A_b \exp^{-\zeta \omega_n t} * \sin(\omega_d t + \phi_2) + B \sin(\omega t)$$

at x2(t>tp)

$$x_2(t) = \exp^{-\zeta \omega_n (t-t_p)} * [x_{po} \cos\{\omega_d(t-t_p)\} + (v_{po} + \zeta \omega_n x_{po}) / \omega_d * \sin\{\omega_d(t-t_p)\}]$$

If at t=tp, $x_{po} = 0, v_{po} = 0 \Rightarrow x_2 = 0$ (t>tp)

$$\sin(\omega t_p) = 0$$

$$x_{po} = A_b \exp^{-\zeta \omega_n t_p} * \sin(\omega_d t_p + \phi_2) = 0$$

$$\omega_d t_p + \phi_2 = (2N - 1)\pi$$

$$v_{po} = -\omega_d A_b \exp^{-\zeta \omega_n t_p} + B\omega = 0$$

$$B\omega = \omega_d A_b \exp^{-\zeta \omega_n t_p}$$

The driving frequency at the time of abruptly stopping the vibration output of the actuator 514 is maintained the same as the driving frequency at the time of generating the vibration output of the actuator 514.

When a difference between the driving frequency and a resonance frequency is less than 20 Hz, the controller 512 controls the time delay of the control pulse to use a range of a $\pm 1/2$ cycle from a 1/2 cycle or 3/2 cycles, such that as the difference between the driving frequency and the resonance frequency increases, the time delay moves away from the 1/2 or 3/2 period.

To set the predetermined time delay of the control pulse by the controller 512, the controller 512 measures an impedance at a driving frequency caused by the vibration output of the actuator 514 and sets a minimum impedance as a corresponding resonance point, or sets a point when a waveform of the driving signal input to the actuator 514 matches a phase of a counter electromotive force generated by the actuator 514 as the corresponding resonance point to acquire a resonance frequency of the wireless terminal 100, thereby setting the time delay of the control pulse in proportion to a difference between the acquired resonance frequency and the driving frequency.

FIG. 7 illustrates a time delay of a control pulse, which linearly changes with respect to a difference between a driving frequency and a natural frequency in a haptic feedback control apparatus for a wireless terminal including a touch screen according to an embodiment of the present invention. Specifically, FIG. 7 illustrates simulation results of an optimal time delay of a control pulse and a strength of a braking signal with respect to a driving frequency, where a natural frequency of 300 Hz and a damping coefficient of 0.05.

Referring to FIG. 7, because the time delay linearly changes with the difference between the driving frequency and the resonance frequency, for a difference of 20 Hz or less, the vibration output generated by the driving of the actuator 514 can be promptly stopped by adjusting the time delay of the control pulse, without changing the driving frequency.

As can be appreciated from the foregoing description, the haptic feedback control method and apparatus according to an embodiment of the present invention input a braking signal, after a predetermined time delay, to brake a vibration output of a motor using resonance, thereby rapidly stopping the vibration output without residual vibration and allowing for rapid key inputs using vibration feedback.

While the present invention has been shown and described with reference to certain embodiments thereof, it will be understood by those skilled in the art that various changes in form and details may be made therein without departing from the spirit and scope of the present invention as defined by the appended claims and equivalents thereof.

**Claims**

1. A haptic feedback control method for a wireless terminal including a touch screen, the haptic feedback control method comprising:

   receiving a touch input from a user;
   sensing a signal generated at a position where the touch input is received;
   transmitting a driving signal to an actuator based on the sensed signal;
   generating, by the actuator, a vibration output based on the driving signal at the position on the touch screen where the touch input is received;
   generating a control pulse having a predetermined time delay while generating the vibration output; and
   stopping the vibration output by applying the control pulse to the vibration output.

2. The haptic feedback control method of claim 1, wherein the vibration output is a vibration pattern having a periodic pulse waveform.

3. The haptic feedback control method of claim 1, wherein stopping the vibration output comprises stopping the vibration output while maintaining a driving frequency that matches a driving frequency at a time of generating the vibration output.

4. The haptic feedback control method of claim 1, wherein the control pulse is generated using:

$$at\ x_1(-t_d < t < 0)$$
$$x_1(t) = A_1 \exp\{-\xi\omega_n(t+t_d)\} \sin\{\omega_d(t+t_d)+\phi_1\}$$
$$at\ x_b(0 < t < t_p)$$
$$x_b(t) = A_b \exp\{-\xi\omega_n t\} \sin\{\omega_d t+\phi_2\} + B\sin(\omega t)$$
$$at\ x_2(t > t_p)$$
$$x_2(t) = \exp\{-\xi\omega_n(t-t_p)\}[x_{p0}\cos\{\omega_d(t-t_p)\} + (v_{p0}+\xi\omega_n x_{p0})/\omega_d * \sin\{\omega_d(t-t_p)\}]$$
$$If\ at\ t = t_p,\ x_{p0} = 0,\ v_{p0} = 0 \Rightarrow x_2 = 0\ (t > t_p)$$
$$Because\ \sin(\omega t_p) = 0,$$
$$x_{p0} = A_b \exp\{-\xi\omega_n t_p\} \sin\{\omega_d t_p + \phi_2\} = 0$$
$$\omega_d t_p + \phi_2 = (2N-1)\pi$$
$$v_{p0} = -\omega_d A_b \exp\{-\xi\omega_n t_p\} + B\omega = 0$$
$$B\omega = \omega_d A_b \exp\{-\xi\omega_n t_p\}$$
$$A_b, \phi_2\ are\ a\ function\ of\ t_d$$

   wherein td represents the predetermined time delay of the control pulse and tp represents a point in time when the control pulse is applied.

5. The haptic feedback control method of claim 1, wherein an impedance is measured at a driving frequency caused by the vibration output of the actuator and a minimum impedance or a point in time when a waveform of the driving signal input to the actuator matches a phase of a counter electromotive force generated by the actuator is set as a corresponding resonance point to acquire a resonance frequency, thereby setting the predetermined time delay in proportion to a difference between the acquired resonance frequency and the driving frequency.

6. The haptic feedback control method of claim 5, wherein the predetermined time delay uses a range of a $\pm 1/2$ cycle from a 1/2 cycle or 3/2 cycles, when the difference between the driving frequency and the resonance frequency is less than 20 Hz.

7. The haptic feedback control method of claim 1, further comprising blocking a driving voltage for stopping the vibration output of the actuator, before generating the control pulse.

8. A haptic feedback control apparatus for a wireless terminal including a touch screen, the haptic feedback control apparatus comprising:

an actuator for generating a vibration output at a particular vibration frequency;
a frequency generator for generating a driving signal having a frequency within a frequency range; and
a controller for receiving the driving signal to drive the actuator, generating a control pulse having a predetermined time delay, and applying the control pulse to the vibration output in order to abruptly stop the vibration output of the actuator.

9. The haptic feedback control apparatus of claim 8, wherein the controller abruptly stops the vibration output while maintaining a driving frequency that matches a driving frequency at a time of generating the vibration output by the actuator.

10. The haptic feedback control apparatus of claim 8, wherein an impedance is measured at a driving frequency caused by the vibration output of the actuator and a minimum impedance or a point in time when a waveform of the driving signal input to the actuator matches a phase of a counter electromotive force generated by the actuator is set as a corresponding resonance point to acquire a resonance frequency, thereby setting the predetermined time delay in proportion to a difference between the acquired resonance frequency and the driving frequency.

FIG.1

FIG.2

FIG.3

START

GENERATE USER TOUCH ~ 410

SENSE VOLTAGE OR CURRENT SIGN ~ 412

GENERATE AND TRANSMIT
DRIVING SIGNAL ~ 414

GENERATE VIBRATION OUTPUT ~ 416

GENERATE AND INPUT CONTROL PULSE
HAVING PREDETERMINED TIME DELAY ~ 418

STOP VIBRATION OUTPUT ~ 420

END

FIG.4

FIG.5

operating to t=-td

x1    xb    x2

t=-td

t=0

t=td

FIG.6

FIG.7

**EP 2 348 384 A2**

**Patent documents cited in the description**

- US 20060119573 A